# EUROPEAN PATENT APPLICATION

(11) **EP 4 529 234 A1**
(43) Date of publication of application: **26.03.2025**
(21) Application number: 23834596.1
(22) Date of filing: 12.06.2023
(51) Int. Cl.: H04W 4/06

(54) **COMMUNICATION METHOD, AND APPARATUS**

(30) Priority: 05.07.2022 CN 202210784117
(71) Applicant: Huawei Technologies Co., Ltd., Shenzhen, Guangdong 518129 (CN)
(72) Inventor: ZHANG, Haisen, Shenzhen, Guangdong 518129 (CN); LI, Bingzhao, Shenzhen, Guangdong 518129 (CN); XU, Bin, Shenzhen, Guangdong 518129 (CN); CAO, Zhenzhen, Shenzhen, Guangdong 518129 (CN); WANG, Yan, Shenzhen, Guangdong 518129 (CN)
(74) Representative: Gill Jennings & Every LLP
(86) International application number: PCT/CN2023/099713
(87) International publication number: WO 2024/007822

(57) **Abstract**

A communication method and apparatus are provided, relate to the field of communication technologies, and are used to alleviate a problem of how to set a PDCP window variable when a terminal device performs packet data convergence protocol PDCP entity suspending or PDCP entity re-establishment. The method may include: The terminal device receives, from a network device, first information indicating packet data convergence protocol PDCP suspending, and sets, to an initial value, a PDCP window variable associated with a radio bearer RB other than a first RB. The first RB may include a multicast and broadcast service radio bearer MRB.

## Description

This application claims priority to Chinese Patent Application No. 202210784117.8, filed with the China National Intellectual Property Administration on July 5, 2022 and entitled "COMMUNICATION METHOD AND APPARATUS", which is incorporated herein by reference in its entirety.

### TECHNICAL FIELD

The application relates to the field of communication technologies, and in particular, to a communication method and apparatus.

### BACKGROUND

In a communication system, for a multicast and broadcast service (multicast and broadcast service, MBS), MBS data may be transmitted between a network device and a plurality of terminal devices corresponding to the MBS service through an MBS radio bearer (MBS radio bearer, MRB).

The network device may use a same MRB to provide MBS data for one or more terminal devices corresponding to the MBS service. In other words, different terminal devices may receive the MBS data sent by the network device through the same MRB. For one MBS service, packet numbers of data packets received by different network devices that are established successively are consistent. To ensure that the packet number of the data packet is synchronized in the terminal device, the network device, and a core network device, when creating an MRB, the network device needs to send a hyper frame number (hyper frame number, HFN) and a reference sequence number (sequence number, SN) to the terminal device.

Currently, when the terminal device enters an inactive (inactive) state, packet data convergence protocol (packet data convergence protocol, PDCP) entity suspending of the terminal device is triggered, and the terminal device needs to set a PDCP window variable to an initial value. When the terminal device performs PDCP entity re-establishment, for an unacknowledged mode (unacknowledged mode, UM) MRB, the terminal device also needs to set the PDCP window variable to the initial value.

The terminal device may determine the initial value of the PDCP window variable based on the HFN and the reference SN that are indicated by the network device, or determine an HFN and an SN of the first data packet based on the SN of the first data packet received by the terminal device through the MRB, and determine the initial value of the PDCP window variable based on the HFN and the SN of the first data packet. However, when the terminal device performs PDCP entity suspending or PDCP entity re-establishment, the network device does not send the HFN or the reference SN to the terminal device. In addition, when the terminal device performs PDCP entity suspending or PDCP entity re-establishment, the terminal device cannot determine the first data packet.

Therefore, when the terminal device performs PDCP entity suspending or PDCP entity re-establishment, how to set the PDCP window variable becomes a technical problem to be urgently resolved.

### SUMMARY

Embodiments of this application provide a communication method and apparatus, to alleviate a problem of how to set a PDCP window variable when a terminal device performs PDCP entity suspending or PDCP entity re-establishment.

According to a first aspect, an embodiment of this application provides a communication method. The method may be performed by a terminal device, or may be performed by a chip used in the terminal device. The following uses an example in which the method is performed by the terminal device for description. The method may include: The terminal device receives first information from a network device, and sets, to an initial value, a PDCP window variable associated with an RB other than a first RB, where the first information indicates PDCP suspending, and the first RB includes an MRB.

Based on the first aspect, when the terminal device performs PDCP entity suspending, because the terminal device cannot obtain an HFN or a reference SN, or cannot obtain the first data packet, the terminal device cannot set the PDCP window variable to the initial value. Based on this, it is pointed in this embodiment of this application that, when the terminal device performs PDCP entity suspending, a PDCP window variable associated with the first RB may not need to be set to an initial value. The terminal device may skip the operation of setting the PDCP window variable to the initial value, and continue to perform a subsequent communication operation based on the current PDCP window variable (for example, the terminal device may normally perform PDCP entity suspending, normally enter an inactive (inactive) state, or normally perform data transmission after re-entering a connected state), to prevent a communication exception caused because the terminal device cannot perform the subsequent communication operation due to a failure of setting the initial value.

In addition, when the terminal device re-enters the connected state, because the PDCP window variable associated with the first RB does not change, a PDCP window may remain unchanged, so that the PDCP window variable associated with the first RB of the current terminal device is consistent with a PDCP window variable associated with a first RB of another terminal device that does not perform PDCP entity suspending.

In a possible design, the terminal device receives first indication information from the network device, where the first indication information indicates to set, to the initial value during PDCP suspending, the PDCP window variable associated with the RB other than the first RB.

Based on this possible design, the terminal device may more accurately determine, based on the first indication information, to set, to the initial value during the PDCP suspending, the PDCP window variable associated with the RB other than the first RB. Alternatively, the terminal device may determine, based on protocol predefinition, to set, to the initial value during the PDCP suspending, the PDCP window variable associated with the RB other than the first RB. Compared with the manner of the first indication information, the manner of using the protocol predefinition can save communication resources and reduce communication overheads.

For example, the first indication information may be carried in the first information, or may be carried in preconfiguration information. This design is flexible, and a plurality of feasible solutions are provided for designing the first indication information.

For example, the PDCP window variable includes one or more of the following: RX_NEXT or RX_DELIV.

According to a second aspect, an embodiment of this application provides a communication method. The method may be performed by a terminal device, or may be performed by a chip used in the terminal device. The following uses an example in which the method is performed by the terminal device for description. The method may include: The terminal device receives second information from a network device, where the second information indicates to reconfigure an MRB, the second information includes second indication information, a hyper frame number HFN, and a reference sequence number SN, the second indication information indicates to re-establish a PDCP entity; and the terminal device re-establishes the PDCP entity based on the second indication information, and sets, to an initial value based on the HFN and the reference SN, a PDCP window variable associated with the MRB.

Based on the second aspect, in addition to receiving, during MRB creation, the HFN and the reference SN that are indicated by the network device, the terminal device may further receive, during MRB reconfiguration, the HFN and the reference SN that are sent by the network device by using the second information. The terminal device may set the PDCP window variable to the initial value based on the HFN and the reference SN in the second information, and may further re-establish the PDCP entity based on the second indication information in the second information, to ensure that a PDCP window variable obtained after the terminal device re-establishes the PDCP entity is consistent with a PDCP window variable of another terminal device and a PDCP window variable of the network device. This avoids a case in which COUNT that is of a same data packet and that is determined based on the HFN and the reference SN in the current terminal device is inconsistent with that in the another terminal device and in the network device.

In a possible design, the MRB is an acknowledged mode AM MRB, the second information further includes third indication information, and the third indication information indicates to set, to an initial value, a PDCP window variable associated with the AM MRB.

For the AM MRB, the terminal device needs to acknowledge transmission of each data packet, to ensure data transmission reliability. Therefore, when re-establishing the PDCP entity, the terminal device maintains the data packet based on an original PDCP window, and cannot set the PDCP window variable to the initial value. However, in some communication scenarios in which data transmission reliability of a source cell does not need to be ensured during cell handover, to avoid disorder that occurs when the terminal device processes or submits a data packet received after the PDCP entity is re-established and a data packet received before the PDCP entity is re-established, the terminal device may set, when re-establishing the PDCP entity, the PDCP window variable to the initial value based on the third indication information sent by the network device. To be specific, after the terminal device completes, based on the original PDCP window, submission of the data packet received before the PDCP entity is re-established, the terminal device may set, to the initial value based on the third indication information, the PDCP window variable associated with the AM MRB, and process, based on a new PDCP window, the data packet received after the PDCP entity is re-established, so that data submission disorder is avoided.

For example, the MRB is an unacknowledged mode UM MRB.

Based on this possible design, for the UM MRB, when re-establishing the PDCP entity, the terminal device may set the PDCP window variable to the initial value, to ensure that the PDCP window variable of the terminal device is consistent with a PDCP window variable of another terminal device and a PDCP window variable of the network device. This avoids a case in which COUNT that is of a same data packet and that is determined based on the HFN and the reference SN in the current terminal device is inconsistent with that in the another terminal device and in the network device.

In a possible design, the MRB is an AM MRB. The AM MRB is associated with an AM RLC entity and a UM RLC entity. The terminal device releases the AM RLC entity; or the terminal device reconfigures the AM RLC entity as the UM RLC entity.

In a possible design, the MRB is an AM MRB. The AM MRB is associated with an AM RLC entity. The terminal device reconfigures the AM RLC entity as a UM RLC entity.

For the AM MRB, because the terminal device needs to acknowledge transmission of each data packet, the terminal device cannot set the PDCP window variable to the initial value when re-establishing the PDCP entity. For the UM MRB, the terminal device may set the PDCP window variable to the initial value when re-establishing the PDCP entity. Based on this, when the terminal device re-establishes the PDCP entity, the terminal device may release the AM RLC entity associated with the AM MRB, or reconfigure the AM RLC entity as the UM RLC entity, to ensure that the terminal device can set the PDCP window variable to the initial value.

According to a third aspect, an embodiment of this application provides a communication method. The method may be performed by a network device, or may be performed by a chip used in the network device. The following uses an example in which the method is performed by the network device for description. The method may include: The network device obtains first information, and sends the first information to a terminal device, where the first information indicates PDCP suspending, the first information is used to trigger the terminal device to set, to an initial value, a PDCP window variable associated with an RB other than a first RB, and the first RB includes an MRB.

In a possible design, the network device sends first indication information to the terminal device, where the first indication information indicates to set, to the initial value during PDCP suspending, the PDCP window variable associated with the RB other than the first RB.

For example, the first indication information may be carried in the first information, or may be carried in preconfiguration information.

For example, the PDCP window variable includes one or more of the following: RX_NEXT or RX_DELIV.

It should be noted that, for technical effects brought by any possible design in the third aspect, refer to the technical effects brought by any possible design in the first aspect. Details are not described herein again.

According to a fourth aspect, an embodiment of this application provides a communication method. The method may be performed by a network device, or may be performed by a chip used in the network device. The following uses an example in which the method is performed by the network device for description. The method may include: The network device obtains second information, and sends the second information to the network device, where the second information indicates to reconfigure a multicast and broadcast service radio bearer MRB, the second information includes second indication information, a hyper frame number HFN, and a reference sequence number SN, the second indication information indicates to re-establish a packet data convergence protocol PDCP entity, and the HFN and the reference SN are used by the terminal device to determine an initial value of a PDCP window variable associated with the MRB.

In a possible design, the MRB is an acknowledged mode AM MRB, the second information further includes third indication information, and the third indication information indicates to set, to an initial value, a PDCP window variable associated with the AM MRB.

For example, the MRB is an unacknowledged mode UM MRB.

In a possible design, the MRB is an AM MRB. The AM MRB is associated with an AM radio link control RLC entity and a UM RLC entity. The method further includes: The network device sends fourth indication information to the terminal device, where the fourth indication information indicates the terminal device to release the AM RLC entity; or the fourth indication information indicates the terminal device to reconfigure the AM RLC entity as the UM RLC entity.

In a possible design, the MRB is an AM MRB. The AM MRB is associated with an AM RLC entity. The method further includes: The network device sends fifth indication information to the terminal device, where the fifth indication information indicates the terminal device to reconfigure the AM RLC entity as a UM RLC entity.

It should be noted that, for technical effects brought by any possible design in the fourth aspect, refer to technical effects brought by any possible design in the second aspect. Details are not described herein again.

According to a fifth aspect, a communication apparatus is provided. For a beneficial effect, refer to the descriptions in the first aspect. Details are not described herein again. The communication apparatus has a function of implementing the activity in the method embodiment in the first aspect. The function may be implemented by hardware, or may be implemented by hardware executing corresponding software. The hardware or the software includes one or more modules corresponding to the foregoing function. In a possible design, the communication apparatus includes: a transceiver module, configured to receive first information from a network device, where the first information indicates packet data convergence protocol PDCP suspending; and a processing module, configured to set, to an initial value, a PDCP window variable associated with a radio bearer RB other than a first RB, where the first RB includes a multicast and broadcast service radio bearer MRB. These modules may perform corresponding functions in the method example in the first aspect. For details, refer to the detailed descriptions in the method example. Details are not described herein again.

According to a sixth aspect, a communication apparatus is provided. For a beneficial effect, refer to the descriptions in the second aspect. Details are not described herein again. The communication apparatus has a function of implementing the activity in the method embodiment in the second aspect. The function may be implemented by hardware, or may be implemented by hardware executing corresponding software. The hardware or the software includes one or more modules corresponding to the foregoing function. In a possible design, the communication apparatus includes: a transceiver module, configured to receive second information from a network device, where the second information indicates to reconfigure a multicast and broadcast service radio bearer MRB, the second information includes second indication information, a hyper frame number HFN, and a reference sequence number SN, and the second indication information indicates to re-establish a packet data convergence protocol PDCP entity; and a processing module, configured to re-establish the PDCP entity based on the second indication information, where the processing module is further configured to set, to an initial value based on the HFN and the reference SN, a PDCP window variable associated with the MRB. These modules may perform corresponding functions in the method example in the second aspect. For details, refer to the detailed descriptions in the method example. Details are not described herein again.

According to a seventh aspect, a communication apparatus is provided. For a beneficial effect, refer to the descriptions in the third aspect. Details are not described herein again. The communication apparatus has a function of implementing the activity in the method embodiment in the third aspect. The function may be implemented by hardware, or may be implemented by hardware executing corresponding software. The hardware or the software includes one or more modules corresponding to the foregoing function. In a possible design, the communication apparatus includes: a processing module, configured to obtain first information, where the first information indicates packet data convergence protocol PDCP suspending; and a transceiver module, configured to send the first information to a terminal device, where the first information is used to trigger the terminal device to set, to an initial value, a PDCP window variable associated with a radio bearer RB other than a first RB, and the first RB includes a multicast and broadcast service radio bearer MRB. These modules may perform corresponding functions in the method example in the third aspect. For details, refer to the detailed descriptions in the method example. Details are not described herein again.

According to an eighth aspect, a communication apparatus is provided. For a beneficial effect, refer to the descriptions in the fourth aspect. Details are not described herein again. The communication apparatus has a function of implementing the activity in the method embodiment in the fourth aspect. The function may be implemented by hardware, or may be implemented by hardware executing corresponding software. The hardware or the software includes one or more modules corresponding to the foregoing function. In a possible design, the communication apparatus includes: a processing module, configured to obtain second information, where the second information indicates to reconfigure a multicast and broadcast service radio bearer MRB; the second information includes second indication information, a hyper frame number HFN, and a reference sequence number SN; the second indication information indicates to re-establish a packet data convergence protocol PDCP entity, and the HFN and the reference SN are used by a terminal device to determine an initial value of a PDCP window variable associated with the MRB; and a transceiver module, configured to send the second information to the terminal device. These modules may perform corresponding functions in the method example in the fourth aspect. For details, refer to the detailed descriptions in the method example. Details are not described herein again.

According to a ninth aspect, a communication apparatus is provided. The communication apparatus may be the terminal device in the foregoing method embodiments, or a chip mounted in the terminal device. The communication apparatus may altematively be the network device in the foregoing method embodiments, or a chip mounted in the network device. The communication apparatus includes one or more processors. The one or more processors are configured to run a computer program or instructions. When the one or more processors execute the computer instruction or the instructions, the communication apparatus is enabled to perform the communication method according to any one of the first aspect or the possible designs of the first aspect, perform the communication method according to any one of the second aspect or the possible designs of the second aspect, perform the communication method according to any one of the third aspect or the possible designs of the third aspect, or perform the communication method according to any one of the fourth aspect or the possible designs of the fourth aspect.

In a possible design, the communication apparatus further includes one or more memories. The one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces. The one or more communication interfaces are coupled to the one or more processors, and the one or more communication interfaces are configured to communicate with a module other than the communication apparatus.

According to a tenth aspect, an embodiment of this application provides a communication apparatus. The communication apparatus may be the terminal device in the foregoing method embodiments, or a chip mounted in the terminal device. The communication apparatus may alternatively be the network device in the foregoing method embodiments, or a chip mounted in the network device. The communication apparatus includes an input/output interface and a logic circuit. The input/output interface is configured to input and/or output information. The logic circuit is configured to perform the communication method according to any one of the first aspect or the possible designs of the first aspect, perform the communication method according to any one of the second aspect or the possible designs of the second aspect, perform the communication method according to any one of the third aspect or the possible designs of the third aspect, or perform the communication method according to any one of the fourth aspect or the possible designs of the fourth aspect, and perform processing based on information and/or generate information.

According to an eleventh aspect, a computer program product is provided. The computer program product includes computer program code. When the computer program code is run, the methods performed by the terminal device in the foregoing aspects are performed.

According to a twelfth aspect, a computer program product is provided. The computer program product includes computer program code. When the computer program code is run, the methods performed by the network device in the foregoing aspects are performed.

According to a thirteenth aspect, this application provides a chip system. The chip system includes a processor, configured to implement functions of the terminal device in the methods in the foregoing aspects. In a possible design, the chip system further includes a memory, configured to store program instructions and/or data. The chip system may include a chip, or may include a chip and another discrete component.

According to a fourteenth aspect, this application provides a chip system. The chip system includes a processor, configured to implement functions of the network device in the methods in the foregoing aspects. In a possible design, the chip system further includes a memory, configured to store program instructions and/or data. The chip system may include a chip, or may include a chip and another discrete component.

According to a fifteenth aspect, this application provides a computer-readable storage medium. The computer-readable storage medium stores a computer program. When the computer program is run, the methods performed by the terminal device in the foregoing aspects are implemented.

According to a sixteenth aspect, this application provides a computer-readable storage medium. The computer-readable storage medium stores a computer program. When the computer program is run, the methods performed by the network device in the foregoing aspects are implemented.

According to a seventeenth aspect, an embodiment of this application provides a computer program. When the computer program is run on a computer, the communication method according to any one of the first aspect or the possible designs of the first aspect is performed, the communication method according to any one of the second aspect or the possible designs of the second aspect is performed, the communication method according to any one of the third aspect or the possible designs of the third aspect is performed, or the communication method according to any one of the fourth aspect or the possible designs of the fourth aspect is performed.

According to an eighteenth aspect, a communication system is provided. The communication system may include the communication apparatus according to any one of possible designs of the fifth aspect and the communication apparatus according to any one of possible designs of the seventh aspect, or include the communication apparatus according to any one of possible designs of the sixth aspect and the communication apparatus according to any one of possible designs of the eighth aspect.

### BRIEF DESCRIPTION OF DRAWINGS

FIG. 1 is a diagram of a communication system according to an embodiment of this application;
FIG. 2 is a diagram of a 5G communication system according to an embodiment of this application;
FIG. 3 is a diagram of a frame structure of a PDU data identifier according to an embodiment of this application;
FIG. 4 is a flowchart of a multicast service establishment process according to an embodiment of this application;
FIG. 5 is a flowchart of an MBS session deactivation process according to an embodiment of this application;
FIG. 6 is a flowchart of an MBS session activation process according to an embodiment of this application;
FIG. 7 is a diagram of an MRB according to an embodiment of this application;
FIG. 8 is a diagram of composition of a communication apparatus according to an embodiment of this application;
FIG. 9a is a flowchart of a communication method according to an embodiment of this application;
FIG. 9b is a flowchart of a communication method according to an embodiment of this application;
FIG. 10 is a flowchart of a communication method according to an embodiment of this application;
FIG. 11 is a diagram of composition of a terminal device according to an embodiment of this application;
FIG. 12 is a diagram of composition of a network device according to an embodiment of this application; and
FIG. 13 is a diagram of composition of a communication apparatus according to an embodiment of this application.

### DESCRIPTION OF EMBODIMENTS

The following describes implementations of embodiments of this application in detail with reference to the accompanying drawings in this specification.

The communication method provided in embodiments of this application may be applied to any communication system. The communication system may be a 3rd generation partnership project (3rd generation partnership project, 3GPP) communication system, for example, a long term evolution (long term evolution, LTE) system, or may be a 5th generation (5th generation, 5G) mobile communication system, a new radio (new radio, NR) communication system, or a new radio vehicle to everything (vehicle to everything, NR V2X) system. Alternatively, the communication method may be applied to an LTE and 5G hybrid networking system, or may be applied to a non-terrestrial network (non-terrestrial network, NTN) system, a device-to-device (device-to-device, D2D) communication system, a machine-to-machine (machine-to-machine, M2M) communication system, the internet of things (internet of things, IoT), and another next generation communication system, for example, a future communication system such as 6G, or may be applied to a non-3GPP communication system. This is not limited.

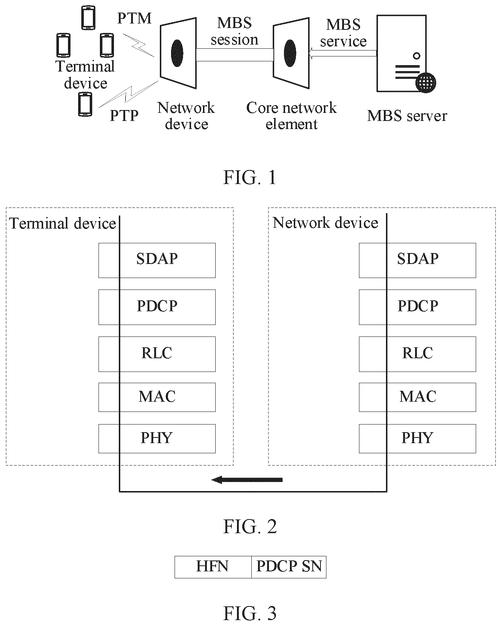

The following uses FIG. 1 as an example to describe the communication system provided in embodiments of this application.

FIG. 1 is a diagram of a communication system according to an embodiment of this application. As shown in FIG. 1, the communication system may include a terminal device, a network device, a core network element, and a data network (data network, DN). The core network element may include a network element such as a mobility management network element, a session management network element, and a user plane network element.

The terminal device in FIG. 1 may be located in cell coverage of the network device. The terminal device may perform air interface communication with the network device through an uplink (uplink, UL) or a downlink (downlink, DL). For example, the terminal device may send uplink data to the network device in an UL direction through a physical uplink shared channel (physical uplink shared channel, PUSCH), and the network device may send downlink data to the terminal device in a DL direction through a physical downlink shared channel (physical downlink shared channel, PDSCH).

In FIG. 1, the terminal device may communicate with the core network element through a specific interface. For example, the terminal device may communicate with the mobility management network element in the core network element through an N1 interface.

After accessing a network, the terminal device may establish a protocol data unit (protocol data unit, PDU) session, access an external data network by using the PDU session, and interact with an application server deployed in the data network.

The terminal device (user equipment, UE) in FIG. 1 may be a device having a wireless transceiver function, or a chip or a chip system that can be disposed in the device, and may also be referred to as a terminal (terminal), a mobile station (mobile station, MS), a mobile terminal (mobile terminal, MT), or the like. Specifically, the terminal device in FIG. 1 may be a mobile phone (mobile phone), a tablet computer, or a computer having a wireless transceiver function. Alternatively, the terminal device may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. This is not limited.

The network device in FIG. 1 may be any device that is deployed in an access network and that can perform wireless communication with the terminal device, and is mainly configured to implement functions such as a radio physical control function, resource scheduling and radio resource management, radio access control, and mobility management. Specifically, the network device may be a device supporting wired access, or may be a device supporting wireless access. For example, the network device may be an access network (access network, AN) device/a radio access network (radio access network, RAN) device, and includes a plurality of AN/RAN nodes. The AN/RAN node may be an access point (access point, AP), a NodeB (NodeB, NB), a macro base station, a micro base station, a relay station, an enhanced NodeB (enhanced NodeB, eNB), a next generation NodeB (NR NodeB, gNB), a transmission reception point (transmission reception point, TRP), a transmission point (transmission point, TP), another access node, or the like. Alternatively, the network device may be of a central unit (central unit, CU)/distributed unit (distributed unit, DU) architecture. In this case, the network device may include two network elements: a CU and a DU. Alternatively, the network device may be of a control plane-user plane (control plane-user plane, CP-UP) architecture. In this case, the network device may include three network elements: a control plane (CU-CP) of a CU, a user plane (CU-UP) of a CU, and a DU. This is not limited.

The mobility management network element in FIG. 1 is mainly responsible for work such as access authentication and mobility management of the terminal device, and signaling exchange between functional network elements, for example, managing a registration status of a user, a connection status of the user, user registration and network access, tracking area update, user authentication during cell handover, and key security.

The session management network element in FIG. 1 may be referred to as a session management function, a multicast/multicast service management function (multicast/broadcast service management function, MB-SMF), a multicast session management network element, or the like. This is not limited. The session management network element is mainly configured to implement a user plane transmission logical channel, for example, a session management function such as PDU session establishment, release, or change. The session management network element may further send quality of service flow (quality of service flow, QoS flow) configuration, a QoS requirement, and the like of the PDU session to the network device via the mobility management network element.

The user plane network element in FIG. 1 may be referred to as a PDU session anchor, a user plane function (user plane function, UPF), or a multicast/broadcast user plane function (multicast/broadcast user plane function, MB-UPF). The user plane network element may be used as an anchor on the user plane transmission logical channel, and is mainly configured to complete functions such as routing and forwarding of user plane data. For example, the user plane network element establishes a channel (namely, the user plane transmission logical channel) to the terminal device, forwards a data packet between the terminal device and the data network on the channel, and is responsible for data packet filtering, data forwarding, rate control, generation of charging information, and the like for the terminal device.

The data network in FIG. 1 may be an operator network that provides a data transmission service for the user, for example, an operator network that can provide an internet protocol multi-media service (internet protocol multi-media service, IMS) for the user. An application server (application server, AS) may be deployed in the data network, and the application server may provide the data transmission service for the user.

It should be noted that the terminal device, the network device, and the core network element in this embodiment of this application each may be one or more chips, or may be a system on chip (system on chip, SoC), or the like. FIG. 1 is merely an example diagram, and a quantity of devices included in FIG. 1 is not limited. In addition, in addition to the devices shown in FIG. 1, the communication system may further include another device. Names of the devices and the links in FIG. 1 are not limited. In addition to the names shown in FIG. 1, the devices and the links may have other names. In addition to the network elements shown in FIG. 1, the network shown in FIG. 1 may further include a policy control network element, an application function network element, a network slice selection network element, a network repository network element, an authentication service network element, a network data analysis network element, a network presentation network element, and the like. This is not limited.

For example, the communication system shown in FIG. 1 is a 5G communication system. As shown in FIG. 2, a network element or an entity corresponding to the foregoing network device may be a RAN in the 5G communication system. A network element or an entity corresponding to the mobility management network element may be an access and mobility management function (access and mobility management function, AMF) in the 5G communication system. A network element or an entity corresponding to the session management network element may be an SMF or an MB-SMF in the 5G communication system. A network element or an entity corresponding to the user plane network element may be a UPF or an MB-UPF in the 5G communication system.

As shown in FIG. 2, UE may communicate with the AMF through an N1 interface, the RAN may communicate with the AMF through an N2 interface, the RAN may alternatively communicate with the UPF through an N3 interface, and the UPF may communicate with an application server in a DN through an N6 interface. Core network elements may communicate with each other through a service-based interface. For example, the AMF may communicate with another core network element through an Namf interface, and the SMF may communicate with another core network element through an Nsmf interface.

Before embodiments of this application are described, technical terms used in embodiments of this application are described.

A multicast and broadcast service (multicast and broadcast service, MBS) is a service oriented to a plurality of terminal devices, and may include a livestreaming service, a public safety service, a batch software update service, and the like. This is not limited.

The MBS service may be from an MBS server in a data network. The MBS service may also be referred to as a multicast service.

For example, as shown in FIG. 1, the MBS server may send data of the MBS service to the core network element, the core network element sends the data of the MBS service to the network device, and the network device sends the data of the MBS service to at least one terminal device that receives the MBS service.

When sending the data of the MBS service to the network device, the core network element may transmit the data through a public transmission channel MBS session. Each MBS session may include at least one MBS quality of service (quality of service, QoS) flow. When sending the data of the MBS service to the terminal device, the network device may transmit the data through an MBS radio bearer. For one MBS radio bearer, there may be two transmission modes. The first one may be a point-to-multipoint (point-to-multipoint, PTM) transmission mode, and the second one may be a point-to-point (point-to-point, PTP) transmission mode.

A radio access network side protocol stack may include a control plane protocol stack and a user plane protocol stack, and communication may be performed between the network device and the terminal device based on the protocol stack.

The user plane protocol stack is used as an example. A structure of the user plane protocol stack may include a radio resource control (radio resource control, RRC) layer, a service data adaptation (service data adaptation protocol, SDAP) layer, a packet data convergence protocol (packet data convergence protocol, PDCP) layer, a radio link control (radio link control, RLC) layer, a media access control (media access link control, MAC) layer, a physical layer (physical layer, PHY), and the like. The physical layer is located at a lowest layer (or described as a layer 1), the MAC layer, the RLC layer, the PDCP layer, and the SDAP layer belong to a second layer (or described as a layer 2), and the RRC layer belongs to a third layer (or described as a layer 3).

For a user plane protocol stack of MBS service transmission, as shown in FIG. 2, an SDAP layer and a PDCP layer are located above a MAC layer and an RLC layer, and data transmission may be performed in a direction shown by an arrow (where for the MBS service, a transmission direction is from a network device to a terminal device). To be specific, data first arrives at the SDAP layer of the network device, is mapped by the SDAP layer, and then is transmitted to a corresponding PDCP entity. After being processed by the PDCP layer of the network device, the data is transmitted to the RLC layer and the MAC layer. After being processed correspondingly, the data is sent from a physical layer, and is transmitted to the terminal device through an air interface. Protocol layers of the terminal device sequentially perform corresponding processing on the received data in a processing order opposite to that of the network device. On a network device side and a terminal device side, processing on a data packet at the layers may be visually combined into a radio bearer. Each piece of data in the radio bearer needs to be processed at the layers. Each layer has a corresponding functional entity or bearer, for example, an SDAP entity of the SDAP layer, a PDCP entity of the PDCP layer, an RLC entity (or described as an RLC bearer) of the RLC layer, or a MAC entity of the MAC layer, to perform a corresponding function.

It should be noted that the foregoing only uses FIG. 2 as an example to describe the user plane protocol stack, and does not constitute a limitation on the structure of the user plane protocol stack.

A PDCP layer function is mainly to process an RRC layer message from a control plane and an internet protocol (internet protocol, IP) packet from a user plane.

A packet data unit (packet data unit, PDU) of the PDCP layer is formed by assembling a service data unit (service data unit, SDU) of the PDCP layer and a PDCP header (header). The PDU of the PDCP layer may be classified into a data PDU (data PDU) and a control PDU (control PDU). The data PDU may include user plane data and control plane data. The control PDU may include a PDCP status report and a robust header compression (robust header compression, ROHC) feedback.

As shown in FIG. 3, a PDCP PDU data identifier may include a high-order hyper frame number (hyper frame number, HFN) and a low-order PDCP sequence number (sequence number, SN). Only the PDCP SN is added to the PDU for transmission, and the HFN is maintained by a transmit end and a receive end. The PDCP PDU sent by the transmit end to the receive end includes the SN number, but does not include COUNT or the HFN. The receive end calculates the HFN, and restores a COUNT value.

Multicast service establishment process: A multicast service is designed for a service with a high QoS requirement, group management is required for the multicast service, and a QoS level the same as that of a unicast service may be provided. Specifically, for the multicast service, the core network element needs to manage joining and exiting of the terminal device. Transmission between the core network element and the network device depends on a PDU session (namely, a PDU session), and an MBS QoS flow is introduced. For the network device, data can be sent to the terminal device in the PTP transmission mode and the PTM transmission mode, and the network device can control dynamic switching between PTP and PTM. The multicast service requires the network device and the core network element to maintain terminal device UE information corresponding to a multicast service group.

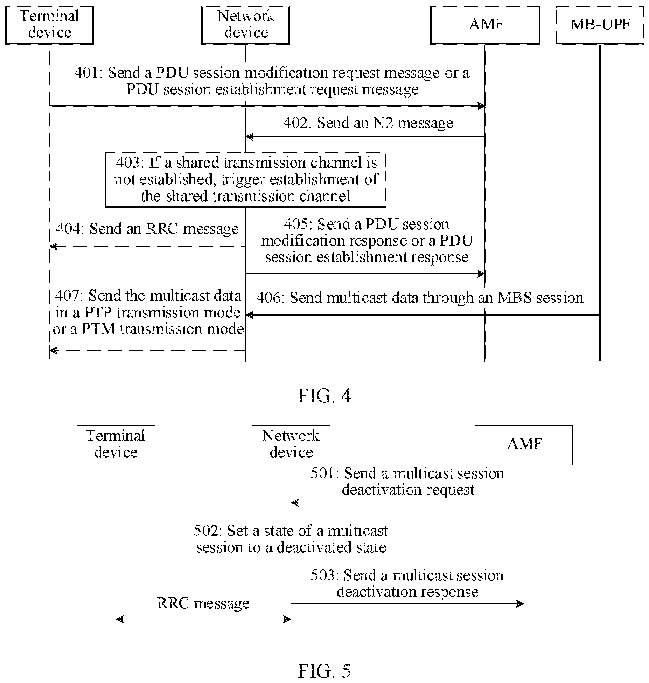

For example, as shown in FIG. 4, the multicast service establishment process may include the following steps.

Step 401: A terminal device sends a PDU session modification request message or a PDU session establishment request message to an AMF.

The PDU session modification request message may include identification information (an MBS Session ID) of an MBS session, and the identification information of the MBS session indicates a multicast group that the terminal device expects to join.

For example, the MBS session ID may be a temporary mobile group identity (temporary mobile group identity, TMGI).

For example, the PDU session modification request message is a PDU Session

### Modification Request message.

For example, the PDU session establishment request message is a PDU Session Establishment Request message or a PDU Session Setup Request message.

For example, the terminal device includes the PDU session modification request message or the PDU session establishment request message in an uplink non-access stratum message (uplink non-access stratum message, UL NAS message) and sends the uplink non-access stratum message to the AMF.

When receiving the PDU session modification request message or the PDU session establishment request message sent by the terminal device, the AMF may send the PDU session modification request message or the PDU session establishment request message to an SMF.

Step 402: The AMF sends an N2 message to a network device.

The N2 message may include multicast session information and PDU session modification information.

For example, the N2 message is the PDU session modification request message or the PDU session establishment request message.

Step 403: If a shared transmission channel is not established, the network device triggers establishment of the shared transmission channel.

The shared transmission channel may also be described as a shared user plane channel (namely, a shared NG-U channel) of an NG interface or a shared transmission channel of a 5G core network (5G core network, 5GC). This is not limited.

If the shared transmission channel is not established, the network device may determine to establish the shared transmission channel for the MBS session. Specifically, the network device may send a distribution setup request (Distribution Setup Request) message to the AMF, and the AMF may send a distribution setup response (Distribution Setup Response) message to the network device.

Step 404: The network device sends an RRC message to the terminal device.

The RRC message sent by the network device to the terminal device may be used to establish a radio resource for the MBS session. The RRC message may include an N1 session management container (N1 SM container) and radio resource configuration information. The N1 SM container may include a PDU session modification command (PDU Session Modification Command). The radio resource configuration information may include an MBS radio bearer (MBS radio bearer, MRB).

Step 405: The network device sends a PDU session modification response or a PDU session establishment response to the AMF.

The network device sends the PDU session modification response or the PDU session establishment response to the AMF, to reply to the AMF with a service establishment status.

For example, the PDU session modification response is a PDU Session Modification Response message.

For example, the PDU session establishment response is a PDU Session Establishment Response message or a PDU Session Setup Response message.

Step 406: An MB-UPF sends multicast data to the network device through the MBS session.

Step 407: The network device sends the multicast data to the terminal device in a PTP transmission mode or a PTM transmission mode.

The multicast data is data of an MBS service.

MBS session activation/deactivation process: For the multicast service, MBS session deactivation/activation triggered by the core network element is supported, and the terminal device is not aware of a service state.

For example, as shown in FIG. 5, the MBS session deactivation process may include the following steps.

Step 501: An AMF sends a multicast session deactivation request (Multicast Session Deactivation Request) to a network device.

Step 502: The network device sets a state of a multicast session to a deactivated state.

Step 503: The network device sends a multicast session deactivation response (Multicast Session Deactivation Response) to the AMF.

The multicast session deactivation response may be a message.

For example, the network device sends an RRC message to a terminal device, to release or skip releasing a connection to the terminal device.

It should be noted that the MBS session deactivation process is applicable only to multicast. The MBS session deactivation process is used to deactivate an MBS data resource of the network device. When triggered by a 5GC, the network device may release a radio resource of the multicast session, and stop transmitting multicast session data to the terminal device. The network device may release or skip releasing the connection to the terminal device, and does not explicitly notify the terminal device of deactivation.

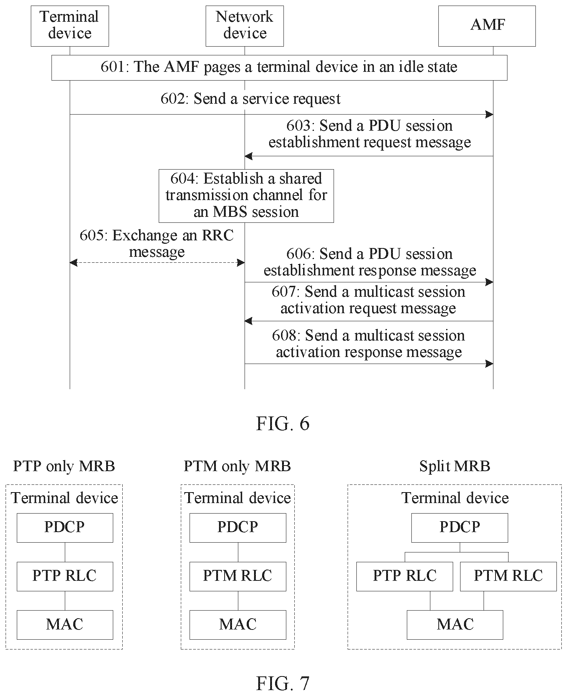

For example, the terminal device is in an idle (CM-IDLE) state. As shown in FIG. 6, the MBS session activation process may include the following steps.

Step 601: An AMF pages a terminal device in an idle state.

Step 602: The terminal device sends a service request to the AMF.

Step 603: The AMF sends a PDU session establishment request (PDU Session Setup Request) message to a network device.

Step 604: The network device establishes a shared transmission channel for an MBS session.

Step 605: The network device exchanges an RRC message with the terminal device.

Step 606: The network device sends a PDU session establishment response (PDU Session Setup Response) message to the AMF.

Step 607: The AMF sends a multicast session activation request (Multicast Session activation Request) message to the network device.

Step 608: The network device sends a multicast session activation response (Multicast Session activation Response) message to the AMF.

It should be noted that the MBS session activation process is applicable only to multicast. The MBS session activation process is used to activate an MBS data resource of the network device. When triggered by a 5GC, a radio resource of a multicast session is established, and the network device starts to transmit multicast session data to the terminal device. A terminal device in a CM-IDLE state and a terminal device in connected and RRC inactive (CM-CONNECTED+RRC Inactive) states that join the multicast session are paged.

An MRB is used to carry user plane data of an MBS service. Based on different service types, MRBs may include a multicast MRB and a broadcast MRB. Based on different transmission modes, the MRBs may include the following three types: a PTP only MRB, a PTM only MRB, and a split (split) MRB (for example, a PTP MRB+a PTM MRB). As shown in FIG. 7, a PTP only MRB is associated with one PTP RLC entity, a PTM only MRB is associated with one PTM RLC entity, and a split MRB is associated with one PTM RLC entity and one PTP RLC entity. PTM RLC is the same for a plurality of terminal devices, and the plurality of terminal devices use a same group radio network temporary identifier (group radio network temporary identifier, g-RNTI) for descrambling. PTP RLC is independent for each terminal device, and each terminal device uses a cell radio network temporary identifier (cell radio network temporary identifier, C-RNTI) of the terminal device for monitoring.

It should be noted that, in embodiments of this application, unless otherwise specified, the MRB may be a multicast MRB and/or a broadcast MRB.

Location-based multicast service: One MBS service may be associated with a plurality of multicast service areas. Each multicast service area is identified by one area session ID (Area Session ID). For a same MBS service, data content and data sources of different area session IDs may be different. The terminal device is not aware of the area session ID, but is only aware of an MBS session ID. The network device controls sending of different multicast data to different terminal devices in different areas.

For example, the MBS session ID may be a TMGI.

PDCP SN synchronization: For an MBS service, to implement handover between network devices, the network devices/cells may ensure, based on a packet number sent by the core network element, that downlink PDCP SNs are synchronized. In other words, a plurality of network devices/cells generate a same PDCP SN number for a same data packet.

Data packet number synchronization: When a unicast data radio bearer (data radio bearer, DRB) is established, a protocol specifies that HFNs are not exchanged through an air interface, and both the network device and the terminal device start from 0. This ensures that HFNs on a terminal device side and a network device side are consistent. Different from a unicast DRB operation, the network device may use a same MRB to provide MBS data for one or more terminal devices corresponding to an MBS service. In other words, terminal devices that successively join the same MBS service are associated with the same MRB of the network device. In addition, for one multicast service, packet numbers of data packets received by different network devices that successively establish MRBs are also consistent. Therefore, to synchronize packet numbers of the terminal device, the current network device, another network device, and the core network element, when creating an MRB, the network device needs to indicate initial COUNT for the terminal device.

The network device may indicate the initial COUNT to the terminal device by indicating an HFN and a reference SN to the terminal device.

HFN and reference SN indication: For a multicast service, when creating an MRB, the network device may indicate an initial value of the HFN to the terminal device by using RRC signaling, and the network device may further indicate, to the terminal device, a reference SN corresponding to the initial value of the HFN. The terminal device initializes a PDCP window variable based on the HFN indicated by the network device and the reference SN associated with the HFN, in other words, sets the PDCP window variable to an initial value based on the HFN and the reference SN.

The PDCP window variable may include one or more of the following: RX_NEXT or RX_DELIV.

RX_NEXT indicates a COUNT value of a next PDCP SDU expected to be received. RX_DELIV indicates a COUNT value of the first (first) PDCP SDU that has not been submitted to an upper layer but is waiting to be submitted.

For example, the network device indicates a multicast HFN and the reference SN (multicastHFN-AndRefSN) to the terminal device in PDCP configuration, to indicate the HFN and the reference SN associated with the HFN.

A value of multicastHFN-AndRefSN includes the HFN and the reference SN, and a bit size of the HFN part is equal to 32 minus a length of a PDCP SN configured in pdcp-SN-SizeDL.

PDCP entity suspending (PDCP entity suspending): When the terminal device enters an inactive (inactive) state, PDCP entity suspending of the terminal device is triggered. In a PDCP entity suspending process, when serving as a transmit end, the terminal device needs to perform the following operations: setting TX_NEXT to an initial value, and discarding all stored PDCP PDUs. When serving as a receive end, the terminal device needs to perform the following operations: if a reordering timer (t-Reordering) is running, stopping and resetting t-Reordering, delivering all the stored PDCP SDUs to the upper layer in ascending order of associated COUNT values after performing header decompression on the stored PDCP SDUs, and setting RX_NEXT and RX_DELIV to initial values.

PDCP entity re-establishment (PDCP entity re-establishment): When the upper layer requests to re-establish a PDCP entity, the terminal device may perform PDCP entity re-establishment. When serving as the receive end, the terminal device needs to perform the following operations:
processing a PDCP data PDU received from a lower layer due to re-establishment of the lower layer;
for a signaling radio bearer (signaling radio bearer, SRB), discarding all the stored PDCP SDUs and PDCP PDUs;
for the SRB, an unacknowledged mode DRB (unacknowledged mode DRB, UM DRB), and a UM MRB, if t-Reordering is running, stopping and resetting t-Reordering, and for the UM DRB and the UM MRB, delivering all the stored PDCP SDUs to the upper layer in ascending order of the associated COUNT values after performing header decompression on the stored PDCP SDUs;
for an acknowledged mode DRB (acknowledged mode DRB, AM DRB) and an AM MRB of a Uu interface, if drb-ContinueROHC is not configured in TS 38.331, performing header decompression on all the stored PDCP SDUs through ROHC;
for an AM DRB of a PC5 interface, performing header decompression on all stored PDCP IP SDUs through ROHC;
for the AM DRB and the AM MRB of the Uu interface, if drb-ContinueEHC-DL is not configured, performing header decompression on all the stored PDCP SDUs through ethernet header compression (ethernet header compression, EHC);
for UM DRBs, AM DRBs, UM MRBs, and AM MRBs, if drb-ContinueROHC is not configured in TS 38.331, resetting a downlink ROHC protocol and starting with a no context (no context, NC) state in a U mode (as defined in RFC 3095 and RFC 4815);
for the UM DRBs, the AM DRBs, the UM MRBs, and the AM MRBs, if drb-ContinueEHC-DL is not configured, resetting a downlink EHC protocol;
for SRBs, the UM DRBs, and the UM MRBs, setting RX_NEXT and RX_DELIV to the initial values;
applying, in a PDCP entity re-establishment process, an encryption algorithm and a key that are provided by the upper layer; and
applying, in the PDCP entity re-establishment process, an integrity protection algorithm and a key that are provided by the upper layer.

Based on the foregoing descriptions of PDCP entity suspending and PDCP entity re-establishment, it can be learned that, when the PDCP entity is suspended, the terminal device needs to set PDCP window variables (namely, RX_NEXT and RX_DELIV) to initial values. When the PDCP entity is re-established, for the UM MRB, the terminal device also needs to set the PDCP window variables to the initial values.

In a possible design, the terminal device may determine the initial value of the PDCP window variable based on the HFN and the reference SN that are indicated by the network device. In other words, the terminal device initializes the PDCP window variable based on the HFN and the reference SN that are indicated by the network device.

For multicast MRBs, an initial value of an SN part of RX_DELIV is set to the reference SN, and an initial value of an HFN part of RX_DELIV is set to the HFN. This is configured by multicastHFN-AndRefSN.

For the multicast MRBs, an initial value of RX_NEXT is 0.

In another possible design, the terminal device may alternatively determine the initial value of the PDCP window variable based on the first data packet received by the terminal device through the MRB. In other words, the terminal device initializes the PDCP window variable based on the first data packet received through the MRB.

For multicast MRBs or broadcast MRBs, an initial value of an SN part of RX_DELIV may be set to (x-0.5×2^{[PDCP-SN-SizeDL-1]}) modulo (2^{[PDCP-SN-SizeDL]}). An initial value of an HFN part of RX_DELIV is set by the terminal device.

x is an SN of the first PDCP data PDU received by the terminal device through the MRB, and modulo represents a modulo operation.

For the multicast MRBs or the broadcast MRBs, an initial value of an SN part of RX_NEXT is (x+1) modulo (2^{[PDCP-SN-SizeDL]}). An initial value of an HFN part of RX_NEXT is set by the terminal device.

x is an SN of the first PDCP data PDU received by the terminal device through the MRB, and modulo represents a modulo operation.

However, the network device sends the HFN and the reference SN to the terminal device when creating an MRB. When performing PDCP entity suspending or PDCP entity re-establishment, the terminal device cannot obtain the HFN or the reference SN, and consequently, the terminal device cannot set the PDCP window variable. In addition, there are N time units between time when the terminal device performs PDCP entity suspending or PDCP entity re-establishment and time when the terminal device receives the first data packet through the MRB. As a result, the terminal device cannot determine the first data packet, and consequently, cannot set the PDCP window variable.

When the terminal device cannot set the PDCP window variable, disorder occurs when the terminal device performs an action of "setting the PDCP window variable to the initial value", and a subsequent communication operation may fail to be normally performed. For example, the terminal device cannot normally perform PDCP entity suspending, cannot normally enter the inactive state, cannot normally re-enter a connected state, or cannot normally perform data transmission after re-entering the connected state. Consequently, a communication exception is caused.

Therefore, when the terminal device performs PDCP entity suspending or PDCP entity re-establishment, how to set the PDCP window variable becomes a technical problem to be urgently resolved.

To resolve this problem, embodiments of this application provide a communication method. The method may include: A terminal device receives, from a network device, first information indicating PDCP suspending, and sets, to an initial value, a PDCP window variable associated with an RB other than a first RB, where the first RB may include an MRB.

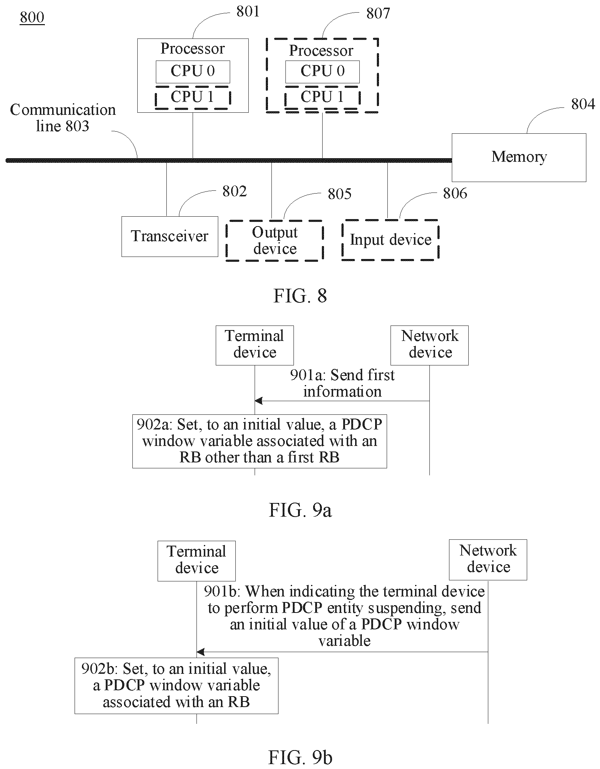

During specific implementation, as shown in FIG. 1 or FIG. 2, for example, each terminal device, each network device, and each core network element may use a composition structure shown in FIG. 8, or include components shown in FIG. 8. FIG. 8 is a diagram of composition of a communication apparatus 800 according to an embodiment of this application. The communication apparatus 800 may be a terminal device or a chip or a system on chip in the terminal device, or may be a network device or a chip or a system on chip in the network device, or may be a core network device or a chip or a system on chip in a core network element. As shown in FIG. 8, the communication apparatus 800 includes a processor 801, a transceiver 802, and a communication line 803.

Further, the communication apparatus 800 may further include a memory 804. The processor 801, the memory 804, and the transceiver 802 may be connected through the communication line 803.

The processor 801 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 801 may be another apparatus having a processing function, for example, a circuit, a component, or a software module. This is not limited.

The transceiver 802 is configured to communicate with another device or another communication network. The another communication network may be the Ethernet, a radio access network (radio access network, RAN), a wireless local area network (wireless local area network, WLAN), or the like. The transceiver 802 may be a module, a circuit, a transceiver, or any apparatus that can implement communication.

The communication line 803 is configured to transfer information between components included in the communication apparatus 800.

The memory 804 is configured to store instructions. The instructions may be a computer program.

The memory 804 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or the like. This is not limited.

It should be noted that the memory 804 may exist independently of the processor 801, or may be integrated with the processor 801. The memory 804 may be configured to store instructions, program code, some data, or the like. The memory 804 may be located inside the communication apparatus 800, or may be located outside the communication apparatus 800. This is not limited. The processor 801 is configured to execute the instructions stored in the memory 804, to implement a communication method provided in the following embodiments of this application.

In an example, the processor 801 may include one or more CPUs, for example, a CPU 0 and a CPU 1 in FIG. 8.

In an optional implementation, the communication apparatus 800 includes a plurality of processors. For example, the communication apparatus 800 may further include a processor 807 in addition to the processor 801 in FIG. 8.

In an optional implementation, the communication apparatus 800 further includes an output device 805 and an input device 806. For example, the input device 806 is a device, for example, a keyboard, a mouse, a microphone, or a joystick, and the output device 805 is a device, for example, a display or a speaker (speaker).

It should be noted that the communication apparatus 800 may be a desktop computer, a portable computer, a network server, a mobile phone, a tablet computer, a wireless terminal, an embedded device, a chip system, or a device having a structure similar to that in FIG. 8. In addition, the composition structure shown in FIG. 8 does not constitute a limitation on the communication apparatus. In addition to the components shown in FIG. 8, the communication apparatus may include more or fewer components than those shown in the figure, or some components may be combined, or different component arrangements may be used.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

With reference to the communication system shown in FIG. 1 or FIG. 2, refer to FIG. 9a. A communication method provided in an embodiment of this application is described. A terminal device may be any terminal device in the communication system shown in FIG. 1 or FIG. 2, and a network device may be any network device in the communication system shown in FIG. 1 or FIG. 2. The terminal device and the network device described in the following embodiments may have the components shown in FIG. 8. Processing performed by a single execution entity (the terminal device or the network device) shown in embodiments of this application may alternatively be divided into processing performed by a plurality of execution entities, and these execution entities may be logically and/or physically separated. This is not limited.

FIG. 9a is a flowchart of a communication method according to an embodiment of this application. As shown in FIG. 9a, the method may include the following steps.

Step 901a: A network device sends first information to a terminal device. Correspondingly, the terminal device receives the first information from the network device.

The first information may indicate PDCP suspending. In other words, the first information indicates PDCP entity suspending.

In a possible design, the first information is carried in RRC release (RRC release) signaling.

When an MBS service is deactivated or there is no data in specific time, an RRC connection of the terminal device may be released, and the terminal device enters an inactive state. To be specific, the network device may send the RRC release signaling to the terminal device, and the terminal device enters the inactive state based on the RRC release signaling, and performs a PDCP entity suspending process based on the first information.

For example, the first information is suspend configuration (suspendconfig) information in the RRC release signaling.

In another possible design, the first information is RRC reject (RRC reject) signaling.

When the terminal device is in the inactive state (in other words, a PDCP entity is suspended), the terminal device may send an RRC resume request (RRC resume request) to the network device. When the network device sends the RRC reject signaling to the terminal device, the terminal device may continue, based on the RRC reject signaling, to keep a PDCP suspended.

Step 902a: The terminal device sets, to an initial value, a PDCP window variable associated with an RB other than a first RB.

The PDCP window variable may include one or more of the following: RX_NEXT or RX_DELIV.

The first RB may be an RB for which an initial value of a PDCP window variable cannot be set in a PDCP entity suspending or PDCP entity re-establishment process.

Alternatively, the first RB may be described as an RB for which an HFN and a reference SN or the first data packet cannot be obtained in a PDCP entity suspending or PDCP entity re-establishment process.

It should be noted that, if an RB meets the foregoing limitation on the first RB, the RB also belongs to the first RB.

For example, the first RB may include an MRB. The MRB may be a multicast MRB, or may be a broadcast MRB. This is not limited.

On a basis of including the MRB, the first RB may not include a DRB or an SRB, in other words, the RB other than the first RB may include the DRB and/or the SRB. However, if there is a DRB or an SRB meeting the foregoing limitation condition on the first RB, the DRB or the SRB may also belong to the first RB.

The terminal device sets, to the initial value, the PDCP window variable associated with the RB other than the first RB. In other words, the terminal device does not need to set, to an initial value, a PDCP window variable associated with the first RB, or an original value of the PDCP window variable associated with the first RB remains unchanged.

In a first possible design, the terminal device receives first indication information from the network device. The first indication information may indicate, when the terminal device performs PDCP suspending, that the terminal device needs to set, to the initial value, the PDCP window variable associated with the RB other than the first RB.

In other words, the first indication information indicates the terminal device to set, to the initial value, the PDCP window variable associated with the RB other than the first RB.

When the PDCP entity is suspended, the terminal device sets, to the initial value based on the first indication information, the PDCP window variable associated with the RB other than the first RB.

The terminal device may determine, based on the first indication information, to set, to the initial value during the PDCP suspending, the PDCP window variable associated with the RB other than the first RB. In other words, the terminal device may determine, based on the first indication information, that during the PDCP suspending, the PDCP window variable associated with the first RB does not need to be set to the initial value.

For example, the first indication information may be carried in the first information.

In another example, the first indication information may be carried in preconfiguration information.

The preconfiguration information may be information that carries the first indication information. The preconfiguration information may be any piece of information that is sent by the network device and that is received by the terminal device before the terminal device receives the first information. This is not limited.

For example, when sending the preconfiguration information to the terminal device, the network device may configure the first indication information in a per RB manner, to be specific, the network device may configure the first indication information for each RB. In other words, the preconfiguration information may include the first indication information of each RB.

For example, RBs configured by the network device for the terminal device include an RB 1, an RB 2, and an RB 3. The preconfiguration information sent by the network device to the terminal device may include configuration information of the RB 1, configuration information of the RB 2, and configuration information of the RB 3. The configuration information of the RB 1 may include first indication information of the RB 1, the configuration information of the RB 2 may include first indication information of the RB 2, and the configuration information of the RB 3 may include first indication information of the RB 3.

Optionally, the first indication information is an information element (information element, IE) in the first information or the preconfiguration information.

For example, the information element may indicate an uninitialized RB type, or indicate an initialized RB type.

For example, an RB type may be indicated in a form of a list. For example, the information element may indicate that the uninitialized RB type includes a multicast MRB and a broadcast DRB. Alternatively, the information element may indicate that the initialized RB type includes an SRB and a DRB.

For another example, a value assignment manner may alternatively be used. For example, when a value of the information element is 1 (or true), it indicates that the information element indicates that the uninitialized RB type includes a multicast MRB and a broadcast DRB. Alternatively, when a value of the information element is 0 (or default), it indicates that the information element indicates that the initialized RB type includes an SRB and a DRB.

When the information element indicates the uninitialized RB type, and during the PDCP suspending, the terminal device may not need to set, to an initial value, a PDCP window variable associated with an RB indicated by the information element. When the information element indicates the initialized RB type, and when the PDCP entity is suspended, the terminal device may set, to an initial value, a PDCP window variable associated with an RB indicated by the information element.

In a second possible design, different from the foregoing manner in which the network device sends the first indication information to the terminal device, to indicate to set, to the initial value during the PDCP suspending, the PDCP window variable associated with the RB other than the first RB, a manner of protocol predefinition may be used. To be specific, it may be specified in a protocol that when the PDCP entity is suspended, the PDCP window variable associated with the RB other than the first RB is set to the initial value.

For example, the first RB includes a multicast MRB and/or a broadcast MRB. It may be specified in a protocol that in a PDCP entity suspending process, when serving as a transmit end, the terminal device needs to perform the following operations: setting TX_NEXT to an initial value, and discarding all stored PDCP PDUs. When serving as a receive end, the terminal device needs to perform the following operations: if a reordering timer (t-Reordering) is running, stopping and resetting t-Reordering, delivering all stored PDCP SDUs to an upper layer in ascending order of associated COUNT values after performing header decompression on the stored PDCP SDUs, and for an RB other than the multicast MRB and/or the broadcast MRB, setting RX_NEXT and RX_DELIV to initial values.

In other words, in the PDCP entity suspending process, when serving as the receive end, for the multicast MRB and/or the broadcast MRB, the terminal device processes t-Reordering, and does not need to set RX_NEXT and RX_DELIV to the initial values.

In other words, in the PDCP entity suspending process, when serving as the receive end, for the RB (for example, a DRB and/or an SRB) other than the first RB, the terminal device needs to perform the following operations: if the reordering timer (t-Reordering) is running, stopping and resetting t-Reordering, delivering all the stored PDCP SDUs to the upper layer in ascending order of the associated COUNT values after performing header decompression on the stored PDCP SDUs, and setting RX_NEXT and RX_DELIV to the initial values. For the first RB (for example, the multicast MRB and/or the broadcast MRB), the terminal device needs to perform the following operations: if the reordering timer (t-Reordering) is running, stopping and resetting t-Reordering, and delivering all the stored PDCP SDUs to the upper layer in ascending order of the associated COUNT values after performing header decompression on the stored PDCP SDUs.

According to the method shown in FIG. 9a, when the terminal device performs PDCP entity suspending, because the terminal device cannot obtain the HFN or the reference SN, or cannot obtain the first data packet, the terminal device cannot set the PDCP window variable to the initial value. Based on this, it is pointed in this embodiment of this application that, when the terminal device performs PDCP entity suspending, the PDCP window variable associated with the first RB may not need to be set to the initial value. To be specific, the terminal device may skip the operation of setting the PDCP window variable to the initial value, and continue to perform a subsequent communication operation based on the current PDCP window variable (for example, the terminal device may normally perform PDCP entity suspending, normally enter the inactive (inactive) state, or normally perform data transmission after re-entering a connected state), to prevent a communication exception caused because the terminal device cannot perform the subsequent communication operation due to a failure of setting the initial value.

In addition, when the terminal device re-enters the connected state, because the PDCP window variable associated with the first RB does not change, a PDCP window may remain unchanged, so that the PDCP window variable associated with the first RB of the current terminal device is consistent with a PDCP window variable associated with a first RB of another terminal device that does not perform PDCP entity suspending. This avoids a case in which COUNT that is of a same data packet and that is determined based on the HFN and the reference SN in the current terminal device is inconsistent with that in another terminal device and in the network device.

Optionally, similar to the foregoing case, in FIG. 9a, in which the terminal device does not need to set, to the initial value when the PDCP entity is suspended, the PDCP window variable associated with the first RB, when performing PDCP entity re-establishment, the terminal device may also not need to set, to the initial value, the PDCP window variable associated with the first RB. For specific descriptions, refer to the related descriptions in FIG. 9a. Details are not described herein again.

Different from the foregoing case in which during PDCP entity suspending or PDCP entity re-establishment, the terminal device does not need to set, to the initial value, the PDCP window variable associated with the first RB, in the following embodiment shown in FIG. 9b, when the terminal device cannot set the initial value of the PDCP window variable, the network device may indicate the initial value of the PDCP window variable to the terminal device.

FIG. 9b shows a communication method according to an embodiment of this application. As shown in FIG. 9b, the method may include the following steps.

Step 901b: When indicating a terminal device to perform PDCP entity suspending, a network device sends an initial value of a PDCP window variable to the terminal device. Correspondingly, the terminal device receives the initial value of the PDCP window variable sent by the network device.

For example, the network device may determine a value of a PDCP window variable on a network device side as an initial value of a PDCP window variable on a terminal device side.

In another example, the network device may determine, based on a value of a PDCP window variable on a network device side, a possible value of the PDCP window variable when an MBS service is activated, and determine the possible value as an initial value of a PDCP window variable on a terminal device side.

In other words, the network device may determine, based on the value of the PDCP window variable on the network device side, a possible value of the PDCP window variable when the terminal device re-enters a connected state, and determine the possible value as the initial value of the PDCP window variable on the terminal device side.

For example, the network device may include the initial value of the PDCP window variable in RRC release signaling or RRC reject signaling, and send the RRC release signaling or the RRC reject signaling to the terminal device.

Step 902b: The terminal device sets, to an initial value, a PDCP window variable associated with an RB.

When performing PDCP suspending, the terminal device may set, to the initial value based on the initial value of the PDCP window variable sent by the network device, the PDCP window variable associated with the RB.

For example, the RB may include one or more of the following: a multicast MRB, a broadcast MRB, an SRB, a DRB, and the like.

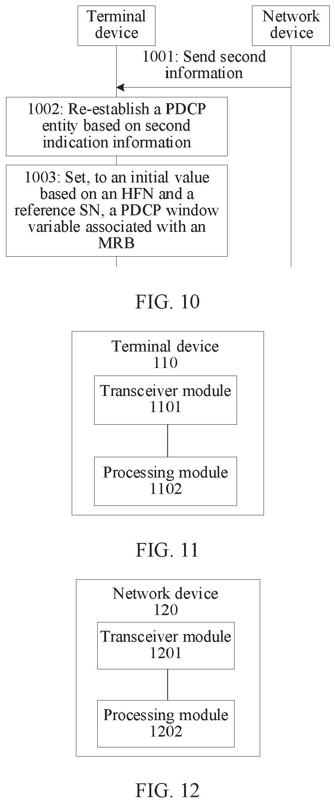

According to the method shown in FIG. 9b, the network device sends the initial value of the PDCP window variable to the terminal device, so that the terminal device can set, to the initial value when the PDCP entity is suspended, the PDCP window variable associated with the RB. Therefore, a problem that the terminal device cannot set the PDCP window variable when the PDCP entity is suspended can be alleviated. In addition, in a network device indication manner, it can be ensured that the PDCP window variable associated with the RB of the terminal device is consistent with the PDCP window variable on the network device side, to avoid a case in which COUNT of a same data packet in the current terminal device is inconsistent with that in another terminal device and in the network device. Different from the foregoing case in which during PDCP entity re-establishment, the terminal device does not need to set, to an initial value, a PDCP window variable associated with an MRB, in an embodiment shown in FIG. 10, during PDCP entity re-establishment, the network device may indicate an HFN and a reference SN to the terminal device, and the terminal device sets, to the initial value based on the HFN and the reference SN that are indicated by the network device, the PDCP window variable associated with the MRB.

FIG. 10 shows a communication method according to an embodiment of this application. As shown in FIG. 10, the method may include the following steps.

Step 1001: A network device sends second information to a terminal device. Correspondingly, the terminal device receives the second information sent by the network device.

The second information may indicate to reconfigure an MRB. In other words, the second information indicates to modify the MRB. It should be noted that, a difference between reconfiguring an MRB and creating an MRB lies in that: Creating an MRB is to create a new MRB, and reconfiguring an MRB is to modify an established MRB.

The MRB may be a multicast MRB and/or a broadcast MRB.

Step 1002: The terminal device re-establishes a PDCP entity based on second indication information.

The second information may include the second indication information, an HFN, and a reference SN. The second indication information indicates to re-establish the PDCP entity.

Step 1003: The terminal device sets, to an initial value based on the HFN and the reference SN, a PDCP window variable associated with the MRB.

For example, when an MBS service is reactivated, an MB-UPF may be reconfigured (for example, an MB-UPF is reselected), and PDCP COUNT may be discontinuous. When the MBS service is deactivated, the network device may release the terminal device to an inactive state. When the MBS service is reactivated, when the terminal device in the inactive state enters a connected state, the PDCP window variable needs to be re-aligned with a PDCP window variable of the network device and a PDCP window variable of a core network element. In other words, the network device may indicate the second information to the terminal device, and the terminal device sets, to the initial value based on the HFN and the reference SN in the second information, the PDCP window variable associated with the MRB.

In another example, in a cell handover (handover, HO) scenario, if PDCP COUNT of a source cell and PDCP COUNT of a target cell are not synchronized, or the source cell and the target cell do not belong to a same area session, the terminal device needs to re-establish the PDCP entity and set the PDCP window variable to the initial value. In other words, the network device may indicate the second information to the terminal device, and the terminal device sets, to the initial value based on the HFN and the reference SN in the second information, the PDCP window variable associated with the MRB, to avoid a case in which a PDCP data packet number of the source cell is inconsistent with a PDCP data packet number of the target cell.

For example, the second information may be carried in RRC resume signaling or RRC reconfiguration signaling.

In a first possible design, for MRB reconfiguration, when the MRB is a UM MRB, the network device may indicate the terminal device to re-establish the PDCP entity, or may indicate the terminal device not to re-establish the PDCP entity. In this application, the network device may indicate, by using the second indication information in the second information, the terminal device to re-establish the PDCP entity.

In addition, in a UM MRB reconfiguration process, the network device may also indicate the HFN and the reference SN to the terminal device by using the second information. When re-establishing the PDCP entity, the terminal device may set, to an initial value based on the HFN and the reference SN in the second information, a PDCP window variable associated with the UM MRB. Therefore, it is ensured that the PDCP window variable obtained after the terminal device re-establishes the PDCP entity is consistent with a PDCP window variable of another terminal device and a PDCP window variable of the network device, to avoid a case in which COUNT that is of a same data packet and that is determined based on the HFN and the reference SN in the current terminal device is inconsistent with that in the another terminal device and in the network device.

For example, the network device may indicate the HFN and the reference SN to the terminal device in a manner of protocol predefinition when reconfiguring the UM MRB. For example, it is specified in a protocol that "when creating an MRB or reconfiguring the UM MRB, the network device indicates the HFN and the reference SN to the terminal device", or "when creating an MRB or reconfiguring the MRB, the network device indicates the HFN and the reference SN to the terminal device". In this way, the network device may indicate the HFN and the reference SN to the terminal device when reconfiguring the UM MRB, so that the terminal device can set, to the initial value based on the HFN and the reference SN, the PDCP window variable associated with the UM MRB.

In a second possible design, when the MRB is an AM MRB, the terminal device needs to acknowledge transmission of each data packet, to ensure data transmission reliability. Therefore, when re-establishing the PDCP entity, the terminal device maintains the data packet based on an original PDCP window (or described as an old PDCP window), and cannot set the PDCP window variable to the initial value. However, for some communication scenarios, when the terminal device performs data transmission based on the AM MRB, data transmission reliability may not need to be considered. When re-establishing the PDCP entity, the terminal device may not need to maintain the data packet based on the original PDCP window, and may set the PDCP window variable to the initial value. Therefore, it is ensured that the PDCP window variable obtained after the terminal device re-establishes the PDCP entity is consistent with a PDCP window variable of another terminal device and a PDCP window variable of the network device, to avoid a case in which COUNT that is of a same data packet and that is determined based on the HFN and the reference SN in the current terminal device is inconsistent with that in the another terminal device and in the network device.

For example, in a cell handover scenario, a packet number of a data packet of a source cell and a packet number of a data packet of a target cell may not be synchronized, or the source cell and the target cell do not belong to a same area session, and a packet number of a data packet in a source area session and a packet number of a data packet in a target area session may be set differently. When performing cell handover, the terminal device may consider data transmission reliability or mobility data continuity of the target cell or the target area session, without considering data transmission reliability or mobility data continuity of the source cell or a source target area. In this case, when re-establishing the PDCP entity, the terminal device can set the PDCP window variable to the initial value. It is ensured that the PDCP window variable obtained after the terminal device re-establishes the PDCP entity is consistent with the PDCP window variable of the another terminal device and the PDCP window variable of the network device.

In an AM MRB reconfiguration process, the network device may indicate, by using the second indication information in the second information, the terminal device to re-establish the PDCP entity. The network device may also indicate the HFN and the reference SN to the terminal device by using the second information. When re-establishing the PDCP entity, the terminal device may set, to an initial value based on the HFN and the reference SN in the second information, a PDCP window variable associated with the AM MRB.

For example, the network device may indicate the HFN and the reference SN to the terminal device in a manner of protocol predefinition when reconfiguring the AM MRB. For example, it is specified in a protocol that "when creating an MRB or reconfiguring the AM MRB, the network device indicates the HFN and the reference SN to the terminal device", or "when creating an MRB or reconfiguring the MRB, the network device indicates the HFN and the reference SN to the terminal device". In this way, the network device may indicate the HFN and the reference SN to the terminal device when reconfiguring the AM MRB, so that the terminal device can set, to the initial value based on the HFN and the reference SN, the PDCP window variable associated with the AM MRB.

In another example, the network device may indicate, in a manner of sending third indication information to the terminal device, the terminal device to set, to the initial value, the PDCP window variable associated with the AM MRB. Therefore, disorder that occurs when the terminal device processes or submits a data packet received after the PDCP entity is re-established and a data packet received before the PDCP entity is re-established is avoided.

To be specific, after the terminal device completes, based on the original PDCP window, submission of the data packet received before the PDCP entity is re-established, the terminal device may set, to the initial value based on the third indication information, the PDCP window variable associated with the AM MRB, and process, based on a new PDCP window, the data packet received after the PDCP entity is re-established, so that data submission disorder is avoided.

The second information sent by the network device to the terminal device may include the third indication information.

For another example, different from the foregoing manner of using the third indication information, a manner of protocol predefinition may be used, to indicate the terminal device to set, to the initial value, the PDCP window variable associated with the AM MRB. For example, it may be specified in a protocol that "in a PDCP entity re-establishment process, the PDCP window variable associated with the MRB is set to the initial value" or it may be specified in a protocol that "in the PDCP entity re-establishment process, the PDCP window variable associated with the AM MRB is set to the initial value".

In a third possible design, when the MRB is an AM MRB, if the AM MRB is associated with an AM RLC entity and a UM RLC entity (for example, the split MRB shown in FIG. 7), the terminal device may release the AM RLC entity (or delete the AM RLC entity); the terminal device reconfigures the AM RLC entity as the UM RLC entity; or the terminal device releases the AM RLC entity and adds (or creates) the UM RLC entity.

After releasing the AM RLC entity, the terminal device may set, to an initial value based on the HFN and the reference SN in the second information, a PDCP window variable associated with a UM MRB. Alternatively, after reconfiguring the AM RLC entity as the UM RLC entity, the terminal device may set, to an initial value based on the HFN and the reference SN in the second information, a PDCP window variable associated with a UM MRB. Alternatively, after releasing the AM RLC entity and adding the UM RLC entity, the terminal device may set, to an initial value based on the HFN and the reference SN in the second information, a PDCP window variable associated with a UM MRB.

For example, the network device sends fourth indication information to the terminal device. The fourth indication information may indicate the terminal device to release the AM RLC entity; the fourth indication information indicates the terminal device to reconfigure the AM RLC entity as the UM RLC entity; or the fourth indication information indicates the terminal device to release the AM RLC entity and add the UM RLC entity.

For example, the fourth indication information is carried in RRC reconfiguration information.

To be specific, the network device sends the RRC reconfiguration information to the terminal device to indicate, during MRB reconfiguration, if the MRB is an AM MRB and the AM MRB is associated with the AM RLC entity and the UM RLC entity, the terminal device to release the AM RLC entity; reconfigure the AM RLC entity as the UM RLC entity; or release the AM RLC entity and add the UM RLC entity.

For example, a manner of protocol predefinition may alternatively be used. To be specific, it is specified in a protocol that during MRB reconfiguration, if the MRB is an AM MRB and the AM MRB is associated with the AM RLC entity and the UM RLC entity, the AM RLC entity is released; the AM RLC entity is reconfigured as the UM RLC entity; or the AM RLC entity is released and the UM RLC entity is added.

In a fourth possible design, when the MRB is an AM MRB, if the AM MRB is associated with an AM RLC entity (for example, the PTP only MRB or the PTM only MRB shown in FIG. 7), the terminal device reconfigures the AM RLC entity as a UM RLC entity; or the terminal device releases the AM RLC entity and adds a UM RLC entity.

After reconfiguring the AM RLC entity as the UM RLC entity, the terminal device may set, to an initial value based on the HFN and the reference SN in the second information, a PDCP window variable associated with a UM MRB. Alternatively, after releasing the AM RLC entity and adding the UM RLC entity, the terminal device may set, to an initial value based on the HFN and the reference SN in the second information, a PDCP window variable associated with a UM MRB.

For example, the network device sends fifth indication information to the terminal device. The fifth indication information may indicate the terminal device to reconfigure the AM RLC entity as the UM RLC entity; or the fifth indication information indicates the terminal device to release the AM RLC entity and add the UM RLC entity.

For example, the fifth indication information is carried in RRC reconfiguration information.

To be specific, the network device sends the RRC reconfiguration information to the terminal device to indicate, during MRB reconfiguration, if the MRB is an AM MRB and the AM MRB is associated with the AM RLC entity, the terminal device to reconfigure the AM RLC entity as the UM RLC entity, or release the AM RLC entity and add the UM RLC entity.

For example, a manner of protocol predefinition may alternatively be used. To be specific, it is specified in a protocol that during MRB reconfiguration, if the MRB is an AM MRB and the AM MRB is associated with the AM RLC entity, the AM RLC entity is reconfigured as the UM RLC entity; or the AM RLC entity is released and the UM RLC entity is added.

According to the method shown in FIG. 10, in addition to indicating the HFN and the reference SN to the terminal device when creating the MRB, the network device may further indicate the HFN and the reference SN to the terminal device when reconfiguring the MRB, so that the terminal device can set, when the PDCP entity is re-established, the PDCP window variable to the initial value based on the HFN and the reference SN that are indicated by the network device, to ensure that the PDCP window variable of the terminal device is consistent with the PDCP window variable of the network device and the PDCP window variable of the core network element, to avoid asynchronization.

Different from the foregoing case, in FIG. 10, in which the network device indicates the HFN and the reference SN to the terminal device when reconfiguring the MRB, when the MRB needs to be reconfigured, the network device may first release the MRB, and then create an MRB. It is specified in a protocol that the network device needs to indicate the HFN and the reference SN to the terminal device when creating the MRB. Therefore, the terminal device may create a PDCP entity, and set, to an initial value based on the HFN and the reference SN that are indicated by the network device, a PDCP window variable associated with the MRB.

It should be noted that, because there is no relationship between a data packet of the released MRB and a data packet of the created MRB, the first data packet received by the terminal device through the created MRB may not be a next data packet of the last data packet received by the terminal device through the released MRB, and a data packet loss may be caused.

It should be noted that the methods provided in embodiments of this application may be implemented separately, or may be implemented together. This is not limited.

It may be understood that in embodiments of this application, an execution entity may perform some or all of the steps in embodiments of this application. The steps or operations are merely examples. Embodiments of this application may further include performing other operations or variations of various operations. In addition, the steps may be performed in a sequence different from a sequence presented in embodiments of this application, and not all the operations in embodiments of this application may be necessarily performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of each device may be obtained through division based on the foregoing method example. For example, each functional module may be obtained through division based on each corresponding function, or two or more functions may be integrated into one processing module. The integrated module may be implemented in the form of hardware, or may be implemented in the form of a software functional module. It should be noted that, in embodiments of this application, module division is an example, and is merely a logical function division. In actual implementation, another division manner may be used.

When each functional module is obtained through division based on each corresponding function, FIG. 11 shows a terminal device 110. The terminal device 110 may perform actions performed by the terminal device in FIG. 9a to FIG. 10.

The terminal device 110 may include a transceiver module 1101 and a processing module 1102. For example, the terminal device 110 may be a terminal device, or may be a chip used in the terminal device or another combined component or part that has a function of the foregoing terminal device. When the terminal device 110 is the terminal device, the transceiver module 1101 may be a transceiver, where the transceiver may include an antenna, a radio frequency circuit, and the like; and the processing module 1102 may be a processor (or a processing circuit), for example, a baseband processor, where the baseband processor may include one or more CPUs. When the terminal device 110 is the part that has the function of the foregoing terminal device, the transceiver module 1101 may be a radio frequency unit; and the processing module 1102 may be a processor (or a processing circuit), for example, a baseband processor. When the terminal device 110 is a chip system, the transceiver module 1101 may be an input/output interface of a chip (for example, a baseband chip); and the processing module 1102 may be a processor (or a processing circuit) of the chip system, and may include one or more central processing units. It should be understood that the transceiver module 1101 in this embodiment of this application may be implemented by the transceiver or a transceiver-related circuit component; and the processing module 1102 may be implemented by the processor or a processor-related circuit component (or referred to as the processing circuit).

For example, the transceiver module 1101 may be configured to perform all sending and receiving operations performed by the terminal device in the embodiments shown in FIG. 9a and FIG. 10, and/or configured to support another process of the technology described in this specification. The processing module 1102 may be configured to perform all operations other than sending and receiving operations performed by the terminal device in the embodiments shown in FIG. 9a and FIG. 10, and/or configured to support another process of the technology described in this specification.

In another possible implementation, the transceiver module 1101 in FIG. 11 may be replaced with a transceiver, and a function of the transceiver module 1101 may be integrated into the transceiver. The processing module 1102 may be replaced with a processor, and a function of the processing module 1102 may be integrated into the processor. Further, the terminal device 110 shown in FIG. 11 may further include a memory.

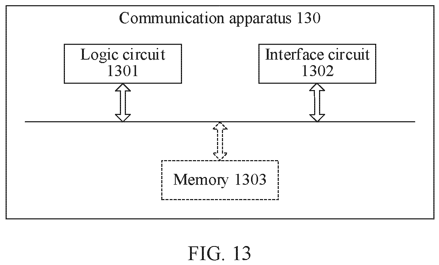

Alternatively, when the processing module 1102 is replaced with a processor, and the transceiver module 1101 is replaced with a transceiver, the terminal device 110 in this embodiment of this application may be a communication apparatus 130 shown in FIG. 13. The processor may be a logic circuit 1301, and the transceiver may be an interface circuit 1302. Further, the communication apparatus 130 shown in FIG. 13 may further include a memory 1303.

When each functional module is obtained through division based on each corresponding function, FIG. 12 shows a network device 120. The network device 120 may perform actions performed by the network device in FIG. 9a to FIG. 10.

The network device 120 may include a transceiver module 1201 and a processing module 1202. For example, the network device 120 may be a network device, or may be a chip used in the network device or another combined component or part that has a function of the foregoing network device. When the network device 120 is the network device, the transceiver module 1201 may be a transceiver, where the transceiver may include an antenna, a radio frequency circuit, and the like; and the processing module 1202 may be a processor (or a processing circuit), for example, a baseband processor, where the baseband processor may include one or more CPUs. When the network device 120 is the part that has the function of the foregoing network device, the transceiver module 1201 may be a radio frequency unit; and the processing module 1202 may be a processor (or a processing circuit), for example, a baseband processor. When the network device 120 is a chip system, the transceiver module 1201 may be an input/output interface of a chip (for example, a baseband chip); and the processing module 1202 may be a processor (or a processing circuit) of the chip system, and may include one or more central processing units. It should be understood that the transceiver module 1201 in this embodiment of this application may be implemented by the transceiver or a transceiver-related circuit component; and the processing module 1202 may be implemented by the processor or a processor-related circuit component (or referred to as the processing circuit).

For example, the transceiver module 1201 may be configured to perform all sending and receiving operations performed by the network device in the embodiments shown in FIG. 9a and FIG. 10, and/or configured to support another process of the technology described in this specification. The processing module 1202 may be configured to perform all operations other than sending and receiving operations performed by the network device in the embodiments shown in FIG. 9a and FIG. 10, and/or configured to support another process of the technology described in this specification.

In another possible implementation, the transceiver module 1201 in FIG. 12 may be replaced with a transceiver, and a function of the transceiver module 1201 may be integrated into the transceiver. The processing module 1202 may be replaced with a processor, and a function of the processing module 1202 may be integrated into the processor. Further, the network device 120 shown in FIG. 12 may further include a memory.

Alternatively, when the processing module 1202 is replaced with a processor, and the transceiver module 1201 is replaced with a transceiver, the network device 120 in this embodiment of this application may be a communication apparatus 130 shown in FIG. 13. The processor may be a logic circuit 1301, and the transceiver may be an interface circuit 1302. Further, the communication apparatus 130 shown in FIG. 13 may further include a memory 1303.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

Embodiments of this application further provide a computer-readable storage medium. All or some of processes in the foregoing method embodiments may be implemented by a computer program instructing related hardware. The program may be stored in the foregoing computer-readable storage medium. When the program is executed, the processes in the foregoing method embodiments may be performed. The computer-readable storage medium may be an internal storage unit in the terminal in any one of the foregoing embodiments (including a data transmit end and/or a data receive end), for example, a hard disk or an internal memory of the terminal. The computer-readable storage medium may alternatively be an external storage device of the foregoing terminal, for example, a plug-in hard disk drive, a smart media card (smart media card, SMC), a secure digital (secure digital, SD) card, and a flash card (flash card) that are configured on the foregoing terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that in the specification, claims, and accompanying drawings of this application, the terms "first", "second", and the like are intended to distinguish between different objects, but are not intended to describe a particular sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

The foregoing descriptions about implementations allow a person skilled in the art to understand that, for the purpose of convenient and brief descriptions, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in the form of hardware, or may be implemented in the form of a software functional unit.

When the integrated unit is implemented in the form of a software functional unit and sold or used as an independent product, the integrated unit may be stored in a readable storage medium. Based on such understanding, the technical solutions in embodiments of this application essentially or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A communication method, comprising:
receiving first information, wherein the first information indicates packet data convergence protocol PDCP suspending; and
setting, to an initial value, a PDCP window variable associated with a radio bearer RB other than a first RB, wherein the first RB comprises a multicast and broadcast service radio bearer MRB.

2. The method according to claim 1, wherein the method further comprises:
receiving first indication information, wherein the first indication information indicates to set, to the initial value during PDCP suspending, the PDCP window variable associated with the RB other than the first RB.

3. The method according to claim 2, wherein the first indication information is carried in the first information.

4. The method according to any one of claims 1 to 3, wherein the PDCP window variable comprises one or more of the following: RX_NEXT or RX_DELIV.

5. A communication method, comprising:
receiving second information, wherein the second information indicates to reconfigure a multicast and broadcast service radio bearer MRB, the second information comprises second indication information, a hyper frame number HFN, and a reference sequence number SN, and the second indication information indicates to re-establish a packet data convergence protocol PDCP entity;
re-establishing the PDCP entity based on the second indication information; and
setting, to an initial value based on the HFN and the reference SN, a PDCP window variable associated with the MRB.

6. The method according to claim 5, wherein
the MRB is an acknowledged mode AM MRB, the second information further comprises third indication information, and the third indication information indicates to set, to an initial value, a PDCP window variable associated with the AM MRB.

7. The method according to claim 5, wherein the MRB is an unacknowledged mode UM MRB.

8. The method according to claim 5, wherein the MRB is an AM MRB, and the method further comprises:
associating the AM MRB with an AM radio link control RLC entity and an unacknowledged mode radio link control UM RLC entity; and
releasing the AM RLC entity; or
reconfiguring the AM RLC entity as the UM RLC entity.

9. The method according to claim 5, wherein the MRB is an AM MRB, and the method further comprises:
associating the AM MRB with an AM RLC entity, and reconfiguring the AM RLC entity as a UM RLC entity.

10. A communication method, comprising:
obtaining first information, wherein the first information indicates packet data convergence protocol PDCP suspending; and
sending the first information, wherein the first information is used to trigger a terminal device to set, to an initial value, a PDCP window variable associated with a radio bearer RB other than a first RB, and the first RB comprises a multicast and broadcast service radio bearer MRB.

11. The method according to claim 10, wherein the method further comprises:
sending first indication information, wherein the first indication information indicates to set, to the initial value during PDCP suspending, the PDCP window variable associated with the RB other than the first RB.

12. The method according to claim 11, wherein
the first indication information is carried in the first information.

13. The method according to any one of claims 10 to 12, wherein the PDCP window variable comprises one or more of the following: RX_NEXT or RX_DELIV.

14. A communication method, comprising:
obtaining second information, wherein the second information indicates to reconfigure a multicast and broadcast service radio bearer MRB, the second information comprises second indication information, a hyper frame number HFN, and a reference sequence number SN, the second indication information indicates to re-establish a packet data convergence protocol PDCP entity, and the HFN and the reference SN are used by a terminal device to determine an initial value of a PDCP window variable associated with the MRB; and
sending the second information.

15. The method according to claim 14, wherein
the MRB is an acknowledged mode AM MRB, the second information further comprises third indication information, and the third indication information indicates to set, to an initial value, a PDCP window variable associated with the AM MRB.

16. The method according to claim 14, wherein
the MRB is an unacknowledged mode UM MRB.

17. The method according to claim 14, wherein the MRB is an AM MRB, the AM MRB is associated with an AM radio link control RLC entity and a UM RLC entity, and the method further comprises:
sending fourth indication information, wherein the fourth indication information indicates the terminal device to release the AM RLC entity, or the fourth indication information indicates the terminal device to reconfigure the AM RLC entity as the UM RLC entity.

18. The method according to claim 14, wherein the MRB is an AM MRB, the AM MRB is associated with an AM RLC entity, and the method further comprises:
sending fifth indication information, wherein the fifth indication information indicates the terminal device to reconfigure the AM RLC entity as a UM RLC entity.

19. A communication apparatus, wherein the communication apparatus comprises a processor, and the processor is configured to run a computer program or instructions, to enable the communication apparatus to perform the communication method according to any one of claims 1 to 4, perform the communication method according to any one of claims 5 to 9, perform the communication method according to any one of claims 10 to 13, or perform the communication method according to any one of claims 14 to 18.

20. A computer-readable storage medium, wherein the computer-readable storage medium stores computer instructions or a program, and when the computer instructions or the program is run on a computer, the communication method according to any one of claims 1 to 4 is performed, the communication method according to any one of claims 5 to 9 is performed, the communication method according to any one of claims 10 to 13 is performed, or the communication method according to any one of claims 14 to 18 is performed.

21. A computer program product, wherein the computer program product comprises computer instructions, and when a part or all of the computer instructions are run on a computer, the communication method according to any one of claims 1 to 4 is performed, the communication method according to any one of claims 5 to 9 is performed, the communication method according to any one of claims 10 to 13 is performed, or the communication method according to any one of claims 14 to 18 is performed.

22. A communication apparatus, comprising a module configured to perform the method according to any one of claims 1 to 4, claims 5 to 9, claims 10 to 13, or claims 14 to 18.
